(19)

**Europäisches Patentamt**
**European Patent Office**
**Office européen des brevets**

(11) **EP 1 914 536 A1**

(12) **EUROPEAN PATENT APPLICATION**

(43) Date of publication:
**23.04.2008 Bulletin 2008/17**

(51) Int Cl.:
**G01N 15/06** *(2006.01)* **B01D 46/46** *(2006.01)*
**F01N 3/032** *(2006.01)*

(21) Application number: **06386033.2**

(22) Date of filing: **17.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **IBIDEN CO., LTD.**
**Ogaki-shi**
**Gifu 503-8604 (JP)**
• **Konstandopoulos, Athanasios**
**54352 Thessaloniki (GR)**

(72) Inventor: **Konstandopoulos, Athanasios**
**Thessaloniki 54352 (GR)**

(74) Representative: **HOFFMANN EITLE**
**Patent- und Rechtsanwälte**
**Arabellastrasse 4**
**81925 München (DE)**

Remarks:
Amended claims in accordance with Rule 137(2) EPC.

(54) **Particulate matter sensor for exhaust gas purifying apparatus**

(57)    A particulate matter detection sensor comprises a particulate matter detection filter and a differential pressure measuring part measuring a differential pressure between an inlet and an outlet of the particulate matter detection filter, wherein the particulate detection filter has a filtration area of 0.1 - 100cm$^2$.

FIG.6

**Description**

TECHNICAL FIELD

The present invention relates to particulate matter sensor, and more particularly to a particulate matter sensor used in an exhaust gas purifying apparatus.

BACKGROUND ART

Conventionally, a diesel particulate filter of porous ceramic has been used for collecting particulate matter primarily of C (carbon) emitted from a diesel engine. With such a diesel particulate filter, there occurs gradual deposition of particulate matter with continual use thereof, and thus, it has been practiced in the art of exhaust gas purifying apparatus that uses a diesel particulate filter to remove the deposited particulate matter by causing a burning process inside the diesel particulate filter periodically and regenerate the diesel particulate filter. When such deposition of particulate matter is not attended to, there is caused an excessive pressure in the diesel particulate filter by the exhaust gas, while this can lead to deterioration of fuel efficiency or damaging of the engine.

It is preferable that such regeneration of the diesel particulate filter is conducted during the operation of the diesel engine, without replacing or dismounting the filter, and thus, it is practiced in the art to carry out fuel injection in the state that the piston is moving down in the cylinder following combustion to form a high temperature gas (post injection process). Thereby, the deposited particulate matter is burned with the high temperature gas thus formed.

DISCLOSURE OF THE INVENTION

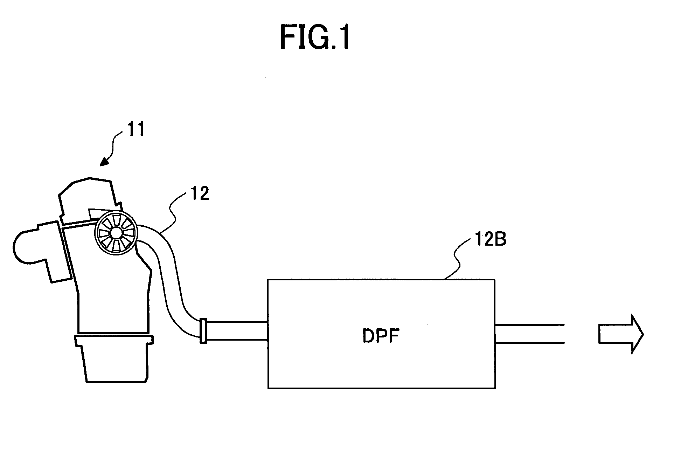

Figure 1 shows the overall construction of an exhaust gas purifying system of a diesel engine equipped with a diesel particulate filter according to a related art of the present invention.

Referring to Figure 1, a diesel engine 11 has an exhaust line 12, wherein there is provided a diesel particulate filter 12B in the exhaust line 12 for collecting the particulate matter contained in the exhaust gas and emitted from the diesel engine 11.

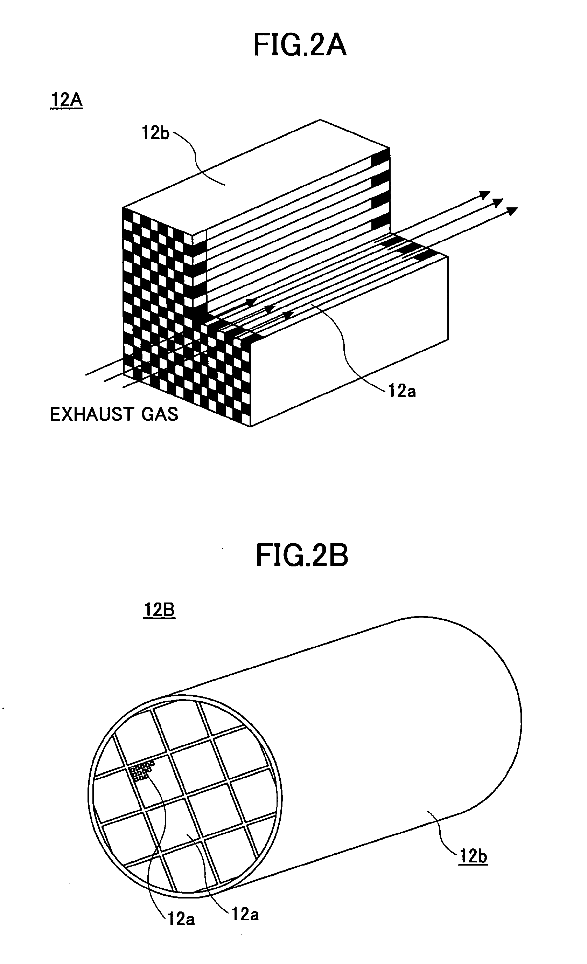

Figure 2A shows the outline of the diesel particulate filter 12B while Figure 2B shows an element that constitutes the diesel particulate filter.

The diesel particulate filter 12B is formed of a filter unit 12A of a porous ceramic, typically of SiC, wherein there are formed a large number of gas passages 12a in the filter unit 12A so as to extend from one end to the other end thereof with a cross-section of 1mm$\times$1mm, for example.

Thereby, the diesel particulate filter 12B is formed by binding plural filter units (filter elements) 12A by a seal material (adhesion layer) and machining the peripheral part thereof such that the filter 12B as a whole has a cylindrical form. Further, the peripheral surface of the filter 12B is covered by a seal material (coating layer). There may be a case in which only one unit 12A is used in the diesel particulate filter 12B.

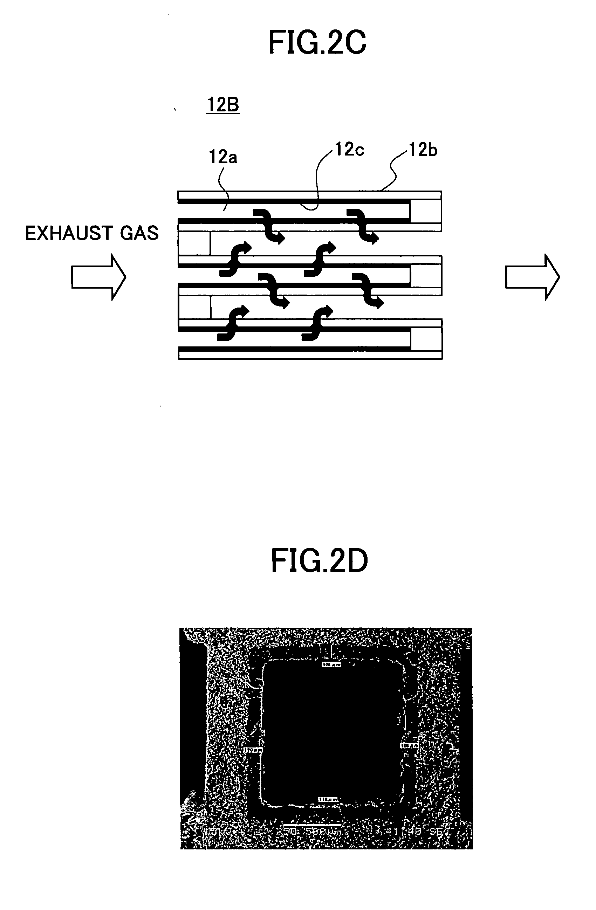

Figure 2C shows the principle of the diesel particulate filter 12B.

As shown schematically in Figure 2C, the plural gas passages 12a have their upstream ends or downstream ends closed alternately with regard to the direction of the exhaust gas flow from the engine, and the exhaust gas introduced to one such gas passage 12a passes to an adjacent gas passage by way of penetration through the porous member 12b of the filter 12B. Thereby, the particulate matter contained in the exhaust gas is collected by the porous member 12b as the exhaust gas penetrates therethrough, and there is caused deposition of the particulate matter 12c on the porous member 12b in the form of layer as shown in Figure 2D.

Because the diesel particulate filter 12B thus causes deposition of the particulate matter contained in the exhaust gas therein, there is a need of regenerating the filter with suitable timing by conducting a regeneration process (burning of the deposited particulate matter), as described previously.

With the conventional exhaust gas purifying system explained with reference to Figure 1, it should be noted that such regeneration of filter is conducted each time the vehicle has traveled a predetermined mileage such as 500km, over the duration of 10 minutes, for example.

In the case the filter regeneration by way of post injection has been conducted impartially, the regeneration is carried out irrespective of actual amount of collection of the particulate matter in the filter. Thus, in order to ensure that there occurs no excessive deposition of the particulate matter in the filter, there is a need to set the interval of filter regeneration to be shorter than what is actually needed for the sake of safety. However, such excessive filter regeneration conducted by post injection increases the fuel consumption, and the fuel efficiency of the vehicle is deteriorated.

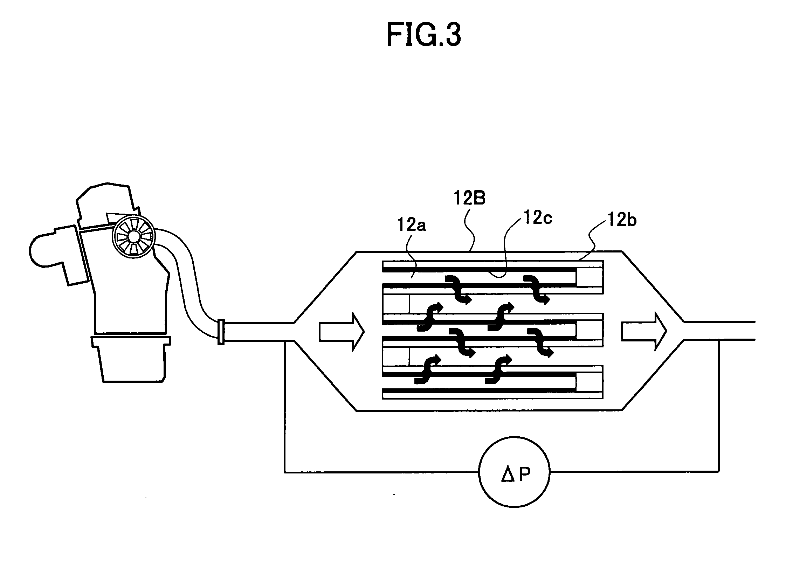

On the other hand, there is a known construction of carrying out regeneration of the diesel particulate filter 12B by way of posit injection as shown in Figure 3, in which a differential pressure $\Delta P$ is measured between the upstream side and downstream side of the diesel particulate filter 12B and the posit injection is carried out when the foregoing differential pressure ΔP has reached a predetermined value. Reference should be made to the United States Patent 6,952,920.

According to the construction of Figure 3, the regeneration of the diesel particulate filter 12B is carried out only when the differential pressure between the upstream side and the downstream side has reached the predetermined value, and unnecessary post injection process is suppressed. Thereby, the fuel efficiency of the vehicle driven with the diesel engine is improved.

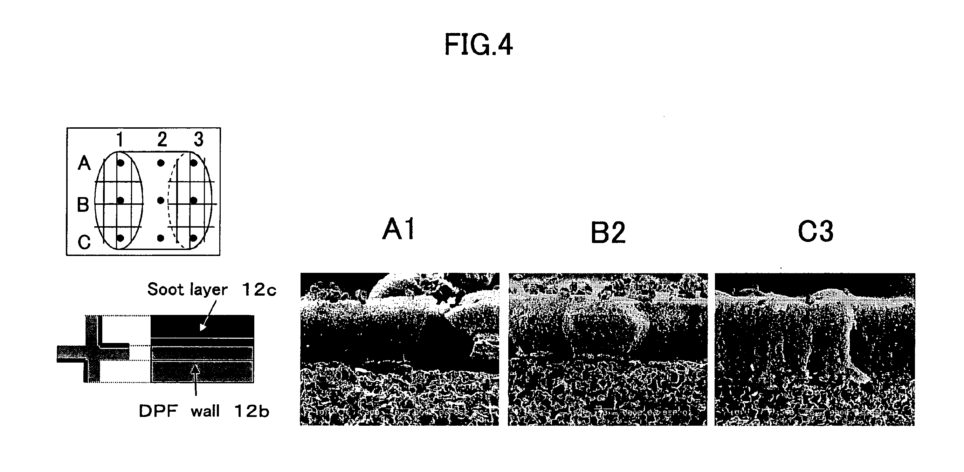

Unfortunately, collection of the particulate matter in the diesel particulate filter 12B is not uniform. As shown in Figure 4, there is a difference of density or thickness in the collected particulate matter depending on the locations (A, 1), (B,1), (C,1), (A,2), (B,2), (C,2), (A,3), (B,3), (C,3) in the filter 12B. Further, it can be seen that there is formed a cavity in the layer of the deposited particulate matter, wherein such a cavity formed in the layer of particulate matter provides as a local passage of exhaust gas. Existence of such a cavity indicates occurrence of uncontrolled burning in the collected particulate matter and indicates further that there has been caused local burning in the collected particulate matter.

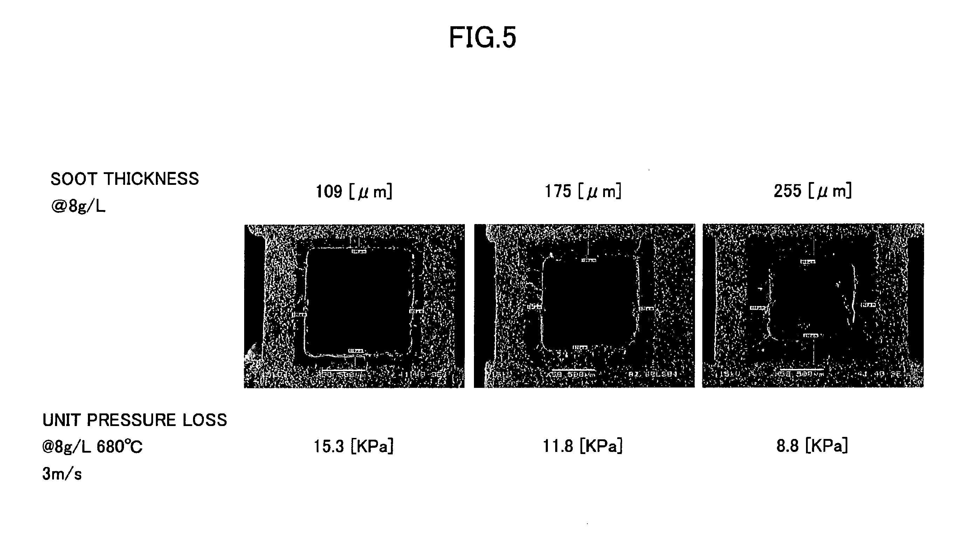

Further, as shown in Figure 5, the density of the collected particulate matter can take different values even when the deposition amount of the particulate matter is identical. Figure 5 shows that there is caused a large variation in the differential pressure according to the change of the thickness, even when the deposition amount is identical. In the examples of Figure 5, for example, it should be noted that the deposition amount of the particulate matter is 8g/L throughout. In spite of this, it can be seen in Figure 5 that the differential pressure has changed from 15.3kPa to 8.8kPa when the thickness of the collected particulate matter has changed from 109μm to 255μm. Thus, it can be seen that there is caused approximately twice as large difference in the differential pressure.

Thus, when such non-uniform deposition or local cavity formation is caused in the particulate matter 12c collected in the construction of Figure 3, there can be caused an error of as much as approximately ±50% with regard to the evaluation of the actually deposited particulate matter and the differential pressure ΔP, with regard to theoretical calculation values. As a result of such an error, there is caused a large deviation in the relationship between the amount of the actually deposited particulate and the timing of regeneration. Further, in view of the fact that the exhaust gas pressure and the exhaust gas flow rate change with engine load or engine revolution, it has been extremely difficult with the construction of Figure 3 to detect the deposition amount of the particulate matter in the diesel particulate filter 12B precisely.

Further, United States Patent 5,651,248 describes the construction that uses, in addition to the diesel particulate filter, a detection filter and evaluates the amount of the particulate matter collected in the detection filter by measuring the electric resistance. According to this technology, the particulate matter collected by the diesel particulate filter and the particulate matter collected by the detection filter are subjected to burning by using a heater when the detected resistance has decreased below a predetermined value. With this, regeneration of filter is achieved.

On the other hand, this prior art has a drawback in that, in addition to the problem that the construction thereof becomes complex because of the need of providing a heater in the diesel particulate filter, there occurs electric power consumption at the time of regeneration of the diesel particulate filter. In order to save the electric power consumption at the time of filter regeneration, the technology of United States Patent 5,651,248 selects the timing of executing the filter regeneration such that the regeneration operation is conducted at the time the temperature of the diesel particulate filter is higher than a predetermined temperature, except for the case in which the diesel particulate filter is in the critical state with regard to the deposition of the particulate matter and it is inevitable to carry out regeneration immediately. As a result, there is imposed a restriction on the timing of regenerating operation of the detection filter used for particulate detection with this technology, and the degree of freedom of regenerating operation of the particulate detection filter is restricted.

Further, with the technology of the United States Patent 5,651,248, it is not possible to use the diesel particulate filter during the regeneration operation carried out by the heater, and because of this, there is provided a reserve diesel particulate filter and switches to this reserve diesel particulate filter during the regeneration process. However, such a construction requires two equivalent diesel particulate filters together with a switching valve, and there arises a problem in that the construction of the exhaust gas purifying apparatus becomes bulky. It is difficult to mount such an exhaust gas purifying apparatus on compact vehicles.

Further, with the technology of the United States Patent 5,651,248, regeneration of the detection filter is carried out concurrently with the diesel particulate filter or consecutively to the diesel particulate filter, while such a construction cannot choose the timing of regeneration of the detection filter arbitrarily, and there is a problem that error tends to be caused in the regeneration timing of the diesel particulate filter, depending upon the state of the detection filter.

When regeneration of the diesel particulate filter and regeneration of the detection filter are carried out independently, there is caused a decrease of ventilation resistance in the detection filter upon regeneration thereof, and the exhaust gas starts to flow primarily through the detection filter. Thereby, there is caused an error in the detection of regeneration timing of the diesel particulate filter. From these reasons, the technology of United Sates Patent 5, 651,248 carries out the regeneration of the detection filter and the regeneration of the diesel particulate filter in synchronization as explained before.

Further, the technology of the United States Patent 5,651,248 has a drawback in the points of: (a) ash deposition; and (b) large evaluation error caused by deterioration.

Further, with the technology of the United States Patent 5,651,248, there arises another problem from the very principle thereof of measuring electric resistance of electrode for evaluating the deposition amount of the collected particulate matter.

As shown in Figure 5, there can be a situation in which the thickness of the collected particulate matter changes in spite of the fact that the deposition amount thereof is the same. Now, when the thickness of the collected particulate matter is different, it becomes difficult to measure the electrical resistance precisely, and there tends to be caused error in the evaluation of the deposition amount.

Further, in the case there is caused a deposition of ash in the diesel particulate filter or detection filter after burning of the particulate matter, no precise measurement of electrical resistance is possible anymore and there should be caused a large error in the evaluation of the deposition amount.

Further, with the use of the detection filter, there is caused degradation in the filter or electrode with time or with use in the ambient of exhaust gas. Particularly, the electrode (terminal formed of a conductive metal) is formed by infiltrating a metal such as Cu, Cr, Ni, or the like, and thus, there is a tendency of causing problems of physical degradation, oxidation degradation and thermal degradation, such as oxidation, adhesion of impurities, cracking, corrosion, and the like.

When there is caused degradation in the filter or electrode, it is no longer possible to carry out precise measurement of the electric resistance and error is caused in the evaluation of the deposition amount of the particulate matter.

In an aspect of the present invention, there is provided a particulate matter detection sensor comprising:

a particulate matter detection filter; and
a differential pressure measuring part measuring a differential pressure between an inlet and an outlet of said particulate matter detection filter,
wherein said particulate matter detection filter has a filtration area of 0.1 - 1000cm$^2$.

According to the present invention, it becomes possible to measure the deposition amount of particulate matter in the primary diesel particulate filter simply and easily, by using a particulate matter detection filter of a small volumetric capacity and having a filtration area of 0.1 - 1000cm$^2$ and by measuring the differential pressure caused in such a particulate matter detection filter.

BRIEF DESCRIPTION OF THE DRAWINGS

Figure 1 is a diagram showing an overall engine system that uses a conventional exhaust gas purifying apparatus;
Figure 2A is a diagram showing a schematic construction of a diesel particulate filter;
Figure 2B is a diagram showing a constituting element of the diesel particulate filter;
Figure 2C is a diagram showing the operational principle of the diesel particulate filter;
Figure 2D is a diagram showing the state of the particulate matter collected by the diesel particulate filter;
Figure 3 is a diagram showing the overall construction of an engine system that uses an exhaust gas purifying apparatus according to a related art of the present invention;
Figure 4 is a diagram explaining the problem with the exhaust gas purifying apparatus of Figure 3;
Figure 5 is another diagram explaining the problem of the exhaust gas purifying apparatus of Figure 3;
Figure 6 is a diagram showing the construction of an exhaust gas purifying apparatus according to a first embodiment of the present invention;
Figure 7A is a diagram showing the construction of a secondary diesel particulate filter used in Figure 6;
Figure 7B is a diagram explaining the principle of the secondary diesel particulate filter of Figure 7A;
Figure 8 is a diagram showing the construction of a particulate matter (PM) sensor that uses the secondary diesel particulate filter of Figure 6;
Figure 9 is a diagram explaining the effect of the invention;
Figure 10 is a diagram showing examples of exhaust gas purifying experiment conducted by using the exhaust gas purifying apparatus of Figure 6;
Figures 11A - 11C are diagrams showing the construction of a secondary diesel particulate filter used with the experiment of Figure 10;
Figures 12A - 12D are diagrams explaining the mixing proportion of source materials of the secondary diesel particulate filter used with the experiment of Figure 10;
Figure 13 is a flow chart explaining the regeneration operation of the diesel particulate filter in the exhaust gas purifying apparatus according to a second embodiment of the present invention;
Figure 14 is a flowchart explaining another regeneration operation of the diesel particulate filter of the exhaust gas purifying apparatus according to the second embodiment of the present invention;
Figure 15 is a diagram showing the construction of a particulate matter sensor according to a third embodiment of the present invention;
Figure 16 is a diagram showing the construction of a particulate matter sensor according to a fourth embodiment of the present invention;
Figure 17 is a diagram showing the construction of a particulate matter sensor according to a modification of Figure 16.

## DETAILED DESCRIPTION OF THE PREFERRED EMBODIMENTS

According to an embodiment of the present invention, there is provided a particulate matter detection sensor, including: a particulate matter detection filter; and a differential pressure measuring part measuring a differential pressure between an inlet and an outlet of the particulate matter detection filter, wherein the particulate matter detection filter has a filtration area in the range of 0.1 - 1000cm$^2$.

Preferably, the filtration area is in the range of 1 - 10cm$^2$.

Preferably, the particulate matter detection filter has a wall gas permeability in the range of $1.0\times10^{-15}$ - $1.0\times10^{-11}$m$^2$.

Preferably, the wall gas permeability is in the range of $1.0\times10^{-13}$- $1.0\times10^{-12}$m$^2$.

Preferably, the particulate matter detection sensor further includes a temperature measuring part measuring a temperature.

Preferably, the particulate matter detection sensor further includes a flow meter or equivalent meter (e.g. a gas velocity meter) that measures a flow rate of an exhaust gas flowing through the particulate detection filter.

Preferably, the particulate matter detection sensor further includes a vessel, at least one of said particulate detection filter, said differential pressure measuring part, said temperature measuring part and said flow meter or equivalent meter (e.g. a gas velocity meter) is accommodated in said vessel.

Preferably, the particulate detection filter comprises any of SiC, aluminum nitride, silicon carbide, boron nitride, tungsten nitride, zirconium carbide, titanium carbide, tantalum carbide, tungsten carbide, alumina, zirconium oxide, cordierite, mullite, silica, and aluminum titanate.

Hereinafter, the present invention will be described in detail with reference to the drawings.

[FIRST EMBODIMENT]

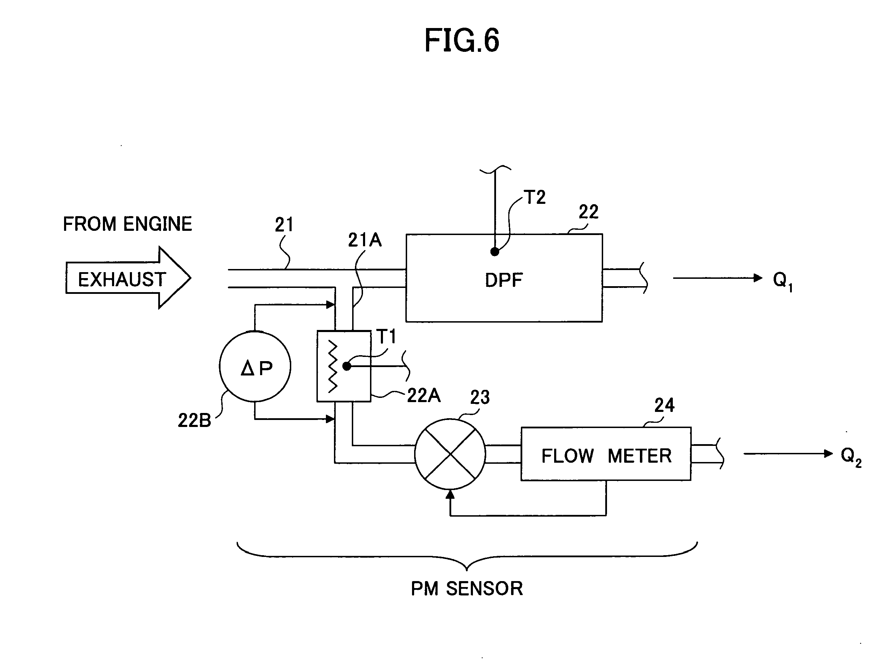

Figure 6 shows the construction of an exhaust gas purifying apparatus 20 according to a first embodiment of the present invention.

Referring to Figure 6, an exhaust gas from a diesel engine not illustrated is caused to flow into a primary diesel particulate filter (DPF) 22 similar to the one explained previously with reference to Figure 2A via an exhaust line 21, and the primary diesel particulate filter (DPF) 22 collects the particulate matter in the exhaust gas as explained with reference to Figures 2C and 2D.

Further, with the construction of Figure 6, a secondary exhaust line 21A is branched from the exhaust line 21 from an upstream side of the primary diesel particulate filter (DPF) 22, and a secondary diesel particulate filter 22A (called also particulate matter collection part of a particulate matter (PM) sensor) is provided to the secondary exhaust line 21A with a volume smaller than the volume of the primary diesel particulate filter (DPF) 22. Further, there is provided a differential pressure gauge 22B for measuring a differential pressure ΔP caused between an inlet and an outlet of the secondary diesel particulate filter 22A. Further, with the construction of Figure 4, there are provided a flow meter 24 and a control valve 23 in the secondary exhaust line 21A at a downstream side of the secondary diesel particulate filter 22A, wherein the control valve 23 is used for maintaining the flow rate of the exhaust gas in the secondary exhaust line 21A constant based on the measurement made by the flow meter 24. It should be noted that the control valve 23 and the flow meter 24 may be provided anywhere on the secondary exhaust line 21A. Here, it should be noted that the secondary diesel particulate filter 22A, the differential pressure gauge 22B and the flow meter 24 constitutes together a particulate matter (PM) sensor that measures the amount of particulate contained in the exhaust gas. The foregoing particulate matter (PM) sensor may or may not include the flow meter 24. The particulate matter (PM) sensor may be defined to include a temperature measuring part (T1). Further, it is possible to provide a temperature measurement part T2 in the primary diesel particulate filter (DPF) 22.

It should be noted that the temperature measuring part in the exhaust line may be provided in any of: (1) interior of the primary diesel particulate filter, (2) interior of the secondary diesel particulate filter, (3) in a pipe connected thereto, (4) exterior of the primary diesel particulate filter, or (5) exterior of the secondary diesel particulate filter. From the viewpoint of precise measurement of the exhaust gas temperature, the arrangement of (1) or (2) is preferable, wherein the arrangement of (2) is thought more preferable.

In the example of Figure 6, the primary diesel particulate filter (DPF) 22 is formed of a porous ceramic of SiC, or the like having a porosity of 35 - 65% in the form of a honeycomb structure, wherein it can be seen that there are formed gas passages of a rectangular cross-section having a length of 1.1mm, for example, for each edge in the cross-section taken perpendicular to the gas flow direction, in correspondence to the gas passages 12a of Figure 2B, wherein the gas passages are arranged with a mutual separation of about 0.3mm and form together a lattice pattern.

Here, it should be noted that, in the present invention, the particulate matter (PM) detection filter is called also a secondary diesel particulate filter.

As shown in Figure 6, the particulate matter detection sensor of the present embodiment is formed by the secondary exhaust line 21A, the secondary diesel particulate filter 22A and the differential pressure gauge 22B measuring the differential pressure $\Delta P$ between the inlet and outlet of the secondary diesel particulate filter 22A. Therein, it will be noted that "particulate matter sensor" is defined as the part performing the function of particulate detection (constituting elements realizing the function of particulate matter detection).

Thus, with the particulate matter sensor of the present embodiment, the constituent elements of the particulate matter detection function may be provided in the form connected by pipes or in the form of an integral unit accommodating in a holder 22e, for example, or in a metal housing.

Further, as shown in Figure 6, it is possible that the particulate matter sensor includes the control valve 23 or flow meter 24 in the form connected by pipes. Alternatively, the control valve 23 and the flow meter 24 may be integrated to the particulate matter sensor. Further, the particulate matter detection sensor may include the temperature measuring part T1.

In the case the temperature measuring part T2 is used for measurement of temperature of the exhaust gas in place of the temperature measuring part T1, the particulate matter sensor includes also the temperature measuring part T2.

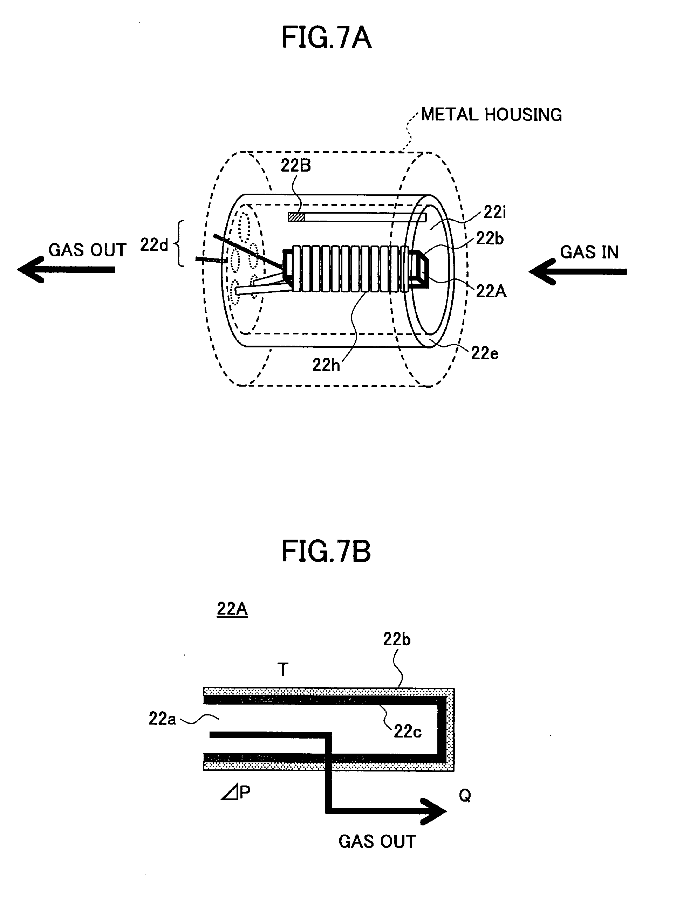

Figure 7A shows the overall construction including the secondary diesel particulate filter 22A, while Figure 7B shows the principle of the secondary diesel particulate filter 22A.

It should be noted that the secondary diesel particulate filter 22A may be formed of a porous ceramic similar to the primary diesel particulate filter (DPF) 22. In the case the secondary diesel particulate filter is formed of a porous ceramic, it is preferable that the secondary diesel particulate filter includes a cell 22b of a rectangular form. Therein, there is formed a single gas passage 22a having a volume of 65ml or less such as 0.05 - 65ml, or 5% or less such as 0.05 - 5% of the total volume of the exhaust gas passages (corresponding to passage 12a of Figure 3) in the primary diesel particulate filter (DPF) 22. Alternatively, the gas passage 22a may have a filtration area of 0.1 - 1000cm$^2$ (preferably 1 - 10cm$^2$). The gas passage 22a may have a rectangular cross-sectional shape, for example, and is formed in the state that one end thereof is closed (rear end is closed in the case of a cell). Here, it should be noted that the outer shape of the gas passage 22a or the outer shape of the secondary diesel particulate filter 22A (cell 22b) is not necessarily be identical to the cross-sectional shape of the gas passages of the primary diesel particulate filter (DPF) 22, and thus, they can be shaped to any arbitrary shape of circular, square, octahedral, elliptical, or the like. Further, it should be noted that the porous ceramic constituting the secondary diesel particulate filter 22A (cell 22b) is not necessarily be identical with the porous ceramic that forms the primary diesel particular filter (DPF) 22. Further, it should be noted that the secondary diesel particulate filter 22A (cell 22b) may be formed of a material other than ceramics.

By forming the gas passage 22a with the volume of 5% or less of the exhaust gas passage (corresponds to the passage 12a of Figure 3) in the primary diesel particulate filter (DPF) 22, or with the volume of 65ml or less, or with the filtration area of 0.1 - 1000cm$^2$ (preferably 1 - 10cm$^2$), it becomes possible to measure the deposition amount of the particulate matter in the primary diesel particulate filter (DPF) 22 with a simple procedure.

The secondary diesel particulate filter 22A (cell 22b) is provided with a temperature measuring part for measuring the exhaust gas temperature T, and a thermocouple 22d is provided for the temperature measuring part. Further, a heater 22h is wound around the secondary diesel particulate filter (cell 22b) for incinerating a soot layer 22c deposited on the inner wall surface and regenerating the secondary diesel particulate filter 22A. Further, the cell 22b, the thermocouple 22d and the heater 22h are accommodated in a cylindrical holder 22e of $SiO_2$-$Al_2O_3$, or the like, via an insulator 22i of $Al_2O_3$, or the like, and there is provided a diaphragm pressure gauge 22B in the holder 22e for measuring the differential pressure $\Delta P$, in such a manner that the exhaust gas in the secondary exhaust line 21A is supplied to the pressure gauge 22B. The holder 22e is accommodated in a metal housing and is provided to the secondary exhaust line as the particulate matter (PM) sensor. The holder 22e may also be provided inside the pipe of the secondary exhaust line or may be provided inside the secondary exhaust line in the state accommodated in the metal housing.

Thus, when the exhaust gas in the secondary exhaust line 21A is introduced to the exhaust passage 22a of the secondary diesel particulate filter (cell 22b), the exhaust is caused to flow outside the cell through the wall surface of the secondary diesel particulate filter (cell 22b), and the particulate matter in the exhaust gas is collected similarly to the case of Figure 2C. Thereby, the particulate matter deposits on the inner surface of the cell 22b to form a layer 22c.

With the present embodiment, the deposition amount of the particulate 22c thus collected and deposited on the inner wall surface of the diesel particulate filter 22 is calculated from the pressure difference ΔP and the exhaust gas temperature T and exhaust gas flow rate Q thus obtained by using the equation (1) below.

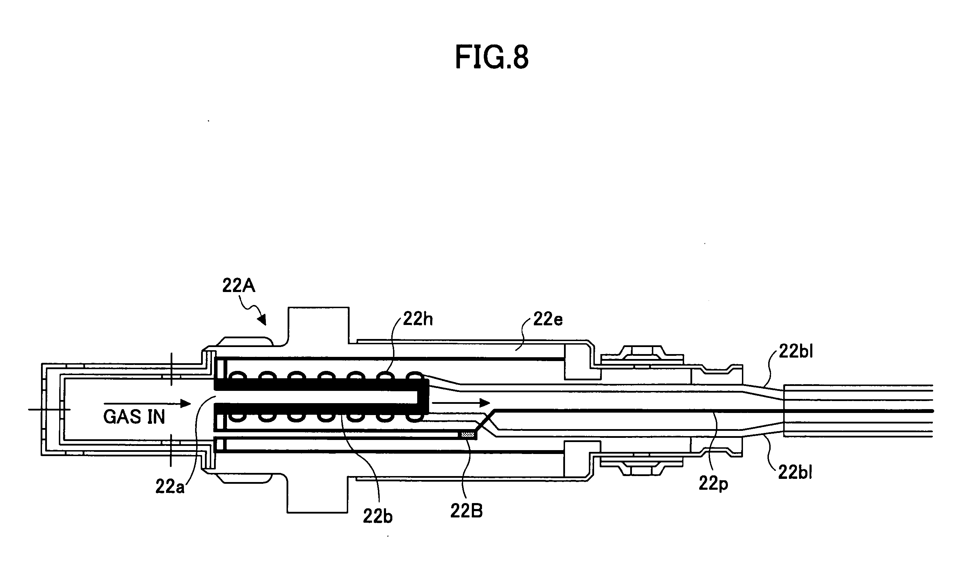

Figure 8 shows a more detailed construction of the secondary diesel particulate filter 22A of Figure 6.

Referring to Figure 8, the exhaust gas in the secondary exhaust line 21A is supplied to the gas passage 22a in the secondary diesel particulate filter (cell 22b) as represented by an arrow and is discharged, after passing through the cell, in the lateral direction or rear direction. Thereby, the heater 22h on the secondary diesel particulate filter (cell 22b) is driven by the electric power supplied by a drive line 22b1 and causes incineration in the particulate matter 22c collected by the cell 22b. Further, the output signal of the diaphragm pressure gauge 22B is supplied to a control circuit via a signal line 22p.

With the secondary diesel particulate filter 22A of Figures 7A and 7B, the amount of soot load of the particulate matter collected in the secondary diesel particulate filter is calculated according to an equation of the form

$$\Delta P = function\ (Flow,\ Temperature,\ Soot\ load,\ Geometry)$$

with a preferred example shown below (although other expressions can be also employed) according to which the thickness W[m] of a layer 22c of the particulate matter collected in the secondary diesel particulate filter is calculated according to

$$\Delta P = \frac{\mu Q}{2V_{trap}}\left(\alpha + W_s\right)^2\left[\frac{W_s}{K_w\alpha} + \frac{1}{2K_{SOOT}}\ln\left(\frac{\alpha}{\alpha - 2W}\right) + \frac{4FL^2}{3}\left(\frac{1}{(\alpha - 2W)^4} + \frac{1}{\alpha^4}\right)\right]$$
$$+ \frac{\rho Q^2(\alpha + Ws)^4}{V_{trap}^2}\left[\frac{\beta Ws}{4} + 2\zeta\left[\frac{L}{\alpha}\right]^2\right]$$

$$(1)$$

wherein ΔP represents the differential pressure [Pa], μ represents a kinetic viscosity coefficient, Q represents the flow rate of the exhaust gas represented in terms of [m³/h], α represents an edge length of the cell, ρ represents a specific gravity of the exhaust gas, $V_{trap}$ represents a filter volume, Ws represents a wall thickness, Kw represents a wall gas permeability, $K_{soot}$ represents a gas permeability of the collected particulate matter layer, W represents the thickness of the collected particulate matter layer, F is a numerical coefficient (=28.454), L represents an effective filter length, β represents the Forchheimer coefficient of the porous wall, ζ represents the inertial loss coefficient of the exhaust gas entering and exiting the filter.

Next, the mass $m_{soot}$ of the particulate matter collected by the secondary diesel particulate filter (cell 21b) is obtained according to

$$W = \frac{\alpha - \sqrt{\alpha^2 - \dfrac{m_{soot}}{N_{cells} \times L \times \rho_{soot}}}}{2}$$

$$(2)$$

wherein $m_{soot}$ represents the mass [g] of the particulate matter collected, while $N_{cells}$ represents an aperture number of the cell at the inlet side, and $\rho_{soot}$ represents the density of the collected particulate matter.

Thus, a collection amount per unit time, PM [g/h] is obtained by dividing $m_{soot}$ by the time [h] as measured from the previous regeneration of the secondary diesel particulate filter 22A.

Once the mass PM [g/h] of the particulate matter deposited in a unit time is obtained, the concentration of the particulate matter in the exhaust gas, $PM_{conc}$ [g/m³], is obtained by using the flow rate Q2 [m³/h] of the exhaust gas passing through the secondary diesel particulate filter 22A as

$$PM \ [g/h] \ = \ PM_{conc} \ [g/m^3] \ \times \ Q2 \ [m^3/h]. \qquad (3)$$

Because the concentration $PM_{conc}$ of the particulate matter in the exhaust gas takes the same value in the secondary exhaust line 21A and also in the exhaust lien 21, the amount of the particulate matter $PM_{enter}$ full filter [g/h] that has flowed into the diesel particulate filter 22 is obtained from the mass PM [g/h] of the particulate matter deposited per unit time, as

$$PM_{enter \ full \ filter} \ [g/h] \ = \ PM_{conc} \ [g/m^3] \ \times \ Q1 \ [m^3/h]$$

$$(4)$$

Further, from this, the amount of the particulate matter deposited in the filter is obtained by taking into consideration the collection efficiency of the filter. In the foregoing, Q1 represents the flow rate of the exhaust gas passing through the primary diesel particulate filter (DPF) 22. Q1 may be obtained by actual measurement or estimated from the operational state of the engine.

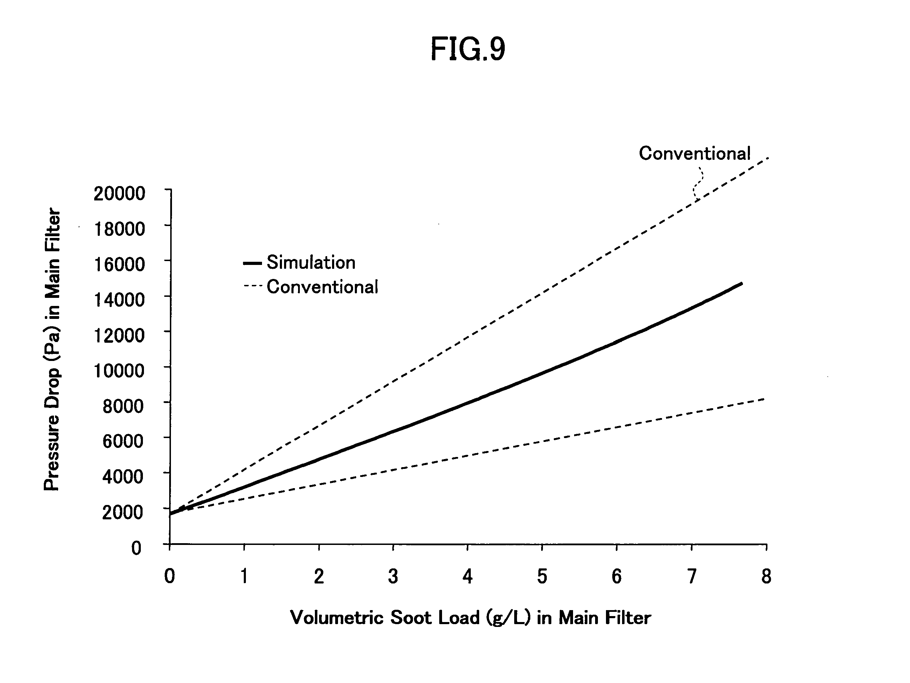

Figure 9 shows the relationship between the differential pressure occurring across the primary diesel particulate filter (DPF) 22 of the exhaust gas purifying apparatus of Figure 6 and the deposition amount of the particulate matter in the primary diesel particulate filter (DPF) 22, wherein it should be noted that the continuous line shows the case in which the deposition amount of the particulate matter in the main diesel particulate filter 22 is obtained by using the secondary diesel particulate filter 22A and Equations (1) - (4). On the other hand, the dotted line represents the case in which the deposition amount of the particulate matter in the primary diesel particulate filter (DPF) 22 is obtained directly from the differential pressure across the primary diesel particulate filter (DPF) 22.

Referring to Figure 9, it can be seen that there can occur a variation, and hence error, of as much as $\pm 50\%$ in the differential pressure across the primary diesel particulate filter (DPF) 22 when compared at the same deposition amount of the particulate matter.

Contrary to this, it is possible to obtain the amount of deposition of the particulate matter collected by the primary diesel particulate filter (DPF) 22 within the error of $\pm 10\%$ by obtaining the differential pressure $\Delta P$ across the secondary diesel particulate matter and by using Equations (1) - (4).

Thus, according to the present invention, it becomes possible to evaluate the deposition amount of the particulate matter in the primary diesel particulate filter (DPF) 22 in the exhaust gas purifying apparatus of Figure 6 precisely by measuring the differential pressure $\Delta P$ formed in the secondary diesel particulate filter 22A of small volume, and it becomes possible to execute the regeneration of the primary diesel particulate filter (DPF) 22 with optimum timing by way of carrying out the post injection based on the foregoing result. With this, unnecessary post injection is avoided and the fuel efficiency of the vehicle is improved.

In the construction of Figure 6, it is possible to use a known Vencheri flow meter or hotwire flow meter, wherein the flow meter 24 can control the exhaust gas flow rate in the secondary exhaust line 21A generally constant within the range of 50 - 6000ml/min, for example. With this, one-sided flow of the exhaust gas through the secondary exhaust line 21A is avoided, and it becomes possible to obtain the deposition amount of the particulate matter in the primary diesel particulate filter (DPF) 22 from the deposition amount obtained by using the secondary diesel particulate filter 22A, with further improved precision.

Here, it should be noted that the "differential pressure measuring part measuring a differential pressure between an inlet and an outlet of said secondary diesel particulate filter" includes not only the differential pressure gauge that measures the differential pressure between the inlet side and the outlet side of the secondary diesel particulate filter 22A but also the construction that uses a pressure gauge only at the outlet side of the diesel particulate filter 22A. With such a construction, the pressure value of the initial state (the state immediately after regeneration) is memorized and the differential pressure is calculated by measuring the pressure for the state in which there occurred deposition of the particulate material in the secondary diesel particulate filter 22A and by subtracting the pressure value thus obtained from the memorized initial pressure value.

Further, it is also possible to provide a flow meter or a flow velocity meter at the inlet side and the outlet side or only at the outlet side of the secondary diesel particulate filter for measuring the differential pressure. With such a construction, the differential pressure is obtained from the reading value of the flow meter, flow velocity meter, or the like, provided at the inlet side and the outlet side of the secondary diesel particulate filter. Alternatively, the differential pressure may be obtained from the reading value of the flow meter or the flow velocity meter at the outlet side of the secondary diesel particulate filter, by comparing the reading value for the initial state (the state immediately after regeneration) and the reading value for the state where there is caused deposition of the particulate matter in the secondary diesel particulate filter.

The present invention has the feature of obtaining the amount of the particulate matter deposited in the primary diesel particulate filter (DPF) 22 from the differential pressure obtained for the secondary diesel particulate filter 22A by using Equations (1) - (4), and thus, any instruments including those that are used conventionally for measuring a differential pressure may be used for measuring the differential pressure of the secondary diesel particulate filter.

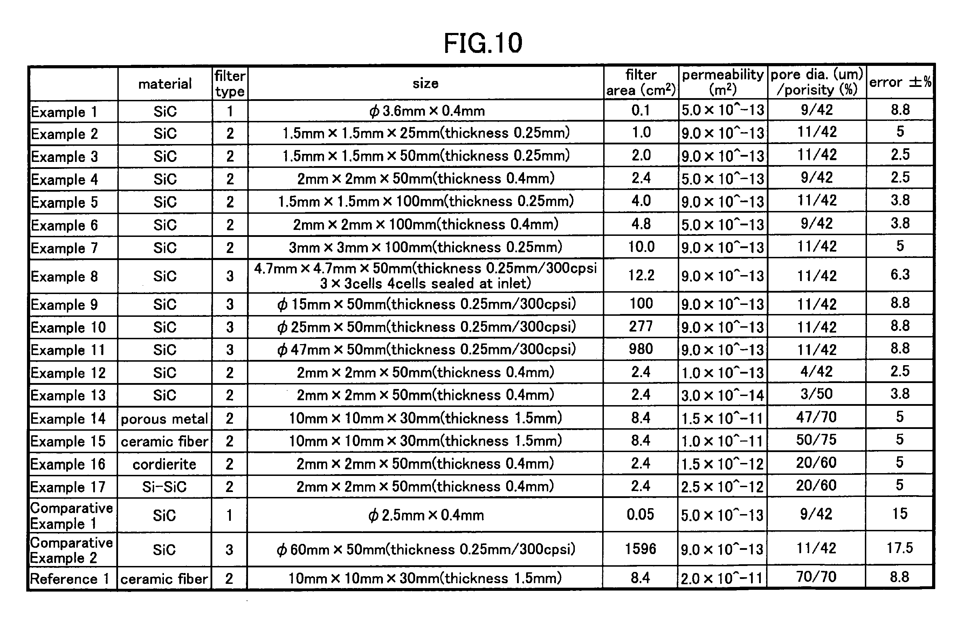

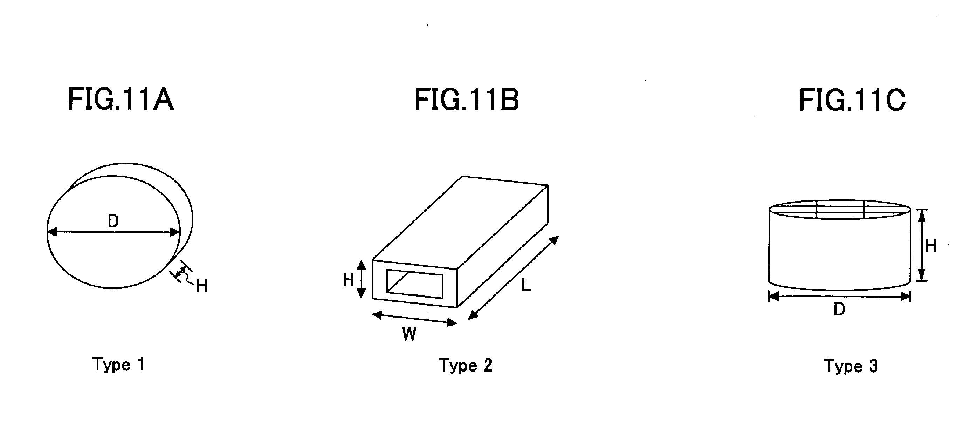

Figure 10 shows the deposition amount of particulate matter in the primary diesel particulate filter (DPF) 22 of Figure 6 evaluated from the differential pressure across the secondary diesel particulate filter 22A and the actual deposition amount of the particulate matter in the primary diesel particulate filter (DPF) 22 for the case the diesel particulate filters of the types 1 - 3 shown in Figures 11A - 11C are fabricated for the secondary diesel particulate filter 22A by using various materials including SiC with various filtration area values and gas permeability values. Here, it should be noted that the diesel particulate filter of the type 1 comprises a disk-shaped component having a circular or elliptical front shape, while the diesel particulate filter of the type 2 has a rectangular shape similar to the one explained previously with reference to Figures 7A and 7B and includes an opening of a corresponding rectangular shape formed therein such that the opening does not penetrate therethrough. Further, the diesel particulate filter of the type 3 of Figure 11C is formed of a diesel particulate filter of honeycomb structure shown in Figure 2B.

Referring to Figure 10, there is formed a diesel particulate filter of type 1 of SiC in Example 1 with a diameter D of 3.6mm and a height H of 0.4mm, wherein the diesel particulate filter of Example 1 is characterized by an average pore diameter of $9\mu m$, a porosity of 42%, a filtration area of $0.1cm^2$ and a wall gas permeability (permeability) of $5.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 8.8\%$.

In Example 2, there is formed a diesel particulate filter of type 2 of SiC with a width W and height H of 1.5mm, a length L of 25mm and a wall thickness of 0.25mm, wherein the diesel particulate filter of Example 2 is characterized by an average pore diameter of $11\mu m$, a porosity of 42%, a filtration area of $1.0cm^2$ and a wall gas permeability (permeability) of $9.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 5\%$.

In Example 3, there is formed a diesel particulate filter of type 2 of SiC with a width W and height H of 1.5mm, a length L of 50mm and a wall thickness of 0.25mm, wherein the diesel particulate filter of Example 3 is characterized by an average pore diameter of $11\mu m$, a porosity of 42%, a filtration area of $2.0cm^2$ and a wall gas permeability (permeability) of $9.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 2.5\%$.

In Example 4, there is formed a diesel particulate filter of type 2 of SiC with a width W and height H of 2mm, a length L of 50mm and a wall thickness of 0.4mm, wherein the diesel particulate filter of Example 4 is characterized by an average pore diameter of $9\mu m$, a porosity of 42%, a filtration area of $2.4cm^2$ and a wall gas permeability (permeability) of $5.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 2.5\%$.

In Example 5, there is formed a diesel particulate filter of type 2 of SiC with a width W and height H of 1.5mm, a length L of 100mm and a wall thickness of 0.25mm, wherein the diesel particulate filter of Example 5 is characterized by an average pore diameter of $11\mu m$, a porosity of 42%, a filtration area of $4.0cm^2$ and a wall gas permeability (permeability) of $9.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 3.8\%$.

In Example 6, there is formed a diesel particulate filter of type 2 of SiC with a width W and height H of 2mm, a length L of 100mm and a wall thickness of 0.4mm, wherein the diesel particulate filter of Example 6 is characterized by an average pore diameter of $9\mu m$, a porosity of 42%, a filtration area of $4.8cm^2$ and a wall gas permeability (permeability) of $5.0 \times 10^{-13}m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 3.8\%$.

In Example 7, there is formed a diesel particulate filter of type 2 of SiC with a width W and height H of 3mm, a length L of 100mm and a wall thickness of 0.25mm, wherein the diesel particulate filter of Example 7 is characterized by an average pore diameter of 11$\mu$m, a porosity of 42%, a filtration area of 10.0cm$^2$ and a wall gas permeability (permeability) of 9.0$\times$10$^{-13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$5.0%.

In Example 8, there is formed a diesel particulate filter of type 3 of SiC in the form of a rectangular body with a width W and height H of 4.7mm, a length L of 50mm and a wall thickness of 0.25mm, wherein the diesel particulate filter of Example 8 is formed with cells with a density of 300 cells per square inch (300cpsi). There are provided 9 cells (=3$\times$3) in total. These cells are sealed at alternate ends, wherein four cells are sealed at the inlet end. The diesel particulate filter of Example 8 has an average pore diameter of 11$\mu$m, a porosity of 42% and is characterized by the filtration area of 12.2cm$^2$ and a wall gas permeability (permeability) of 9.0$\times$10$^{13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$6.3%.

In Example 9, there is formed a diesel particulate filter of type 3 of SiC with a diameter of 15mm, a height H of 50mm, wherein the diesel particulate filter of Example 9 is formed with cells with a density of 300 cells per square inch (300cpsi) and a wall thickness of 0.25mm. The diesel particulate filter of Example 9 has an average pore diameter of 11$\mu$m, a porosity of 42% and is characterized by the filtration area of 100.0cm$^2$ and a wall gas permeability (permeability) of 9.0$\times$10$^{13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$8.8%.

In Example 10, there is formed a diesel particulate filter of type 3 of SiC with a diameter of 25mm, a height H of 50mm, wherein the diesel particulate filter of Example 10 is formed with cells with a density of 300 cells per square inch (300cpsi) and a wall thickness of 0.25mm. The diesel particulate filter of Example 10 has an average pore diameter of 11$\mu$m, a porosity of 42% and is characterized by the filtration area of 277.0cm$^2$ and a wall gas permeability (permeability) of 9.0$\times$10$^{13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$8.8%.

In Example 11, there is formed a diesel particulate filter of type 3 of SiC with a diameter of 47mm, a height H of 50mm, wherein the diesel particulate filter of Example 11 is formed with cells with a density of 300 cells per square inch (300cpsi) and a wall thickness of 0.25mm. The diesel particulate filter of Example 11 has an average pore diameter of 11$\mu$m, a porosity of 42% and is characterized by the filtration area of 980.0cm$^2$ and a wall gas permeability (permeability) of 9.0$\times$10$^{13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$8.8%.

In Example 12, there is formed a diesel particulate filter of type 2 of SiC with a width W and height H of 2mm, a length L of 50mm and a wall thickness of 0.4mm, wherein the diesel particulate filter of Example 12 is characterized by an average pore diameter of 4$\mu$m, a porosity of 42%, a filtration area of 2.4cm$^2$ and a wall gas permeability (permeability) of 1$\times$10$^{-13}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$2.5%.

In Example 13, there is formed a diesel particulate filter of type 2 of SiC with a width W and height H of 2mm, a length L of 50mm and a wall thickness of 0.4mm, wherein the diesel particulate filter of Example 13 is characterized by an average pore diameter of 3$\mu$m, a porosity of 50%, a filtration area of 2.4cm$^2$ and a wall gas permeability (permeability) of 3.0$\times$10$^{-14}$m$^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm$3.8%.

In Example 14, there is formed a diesel particulate filter of type 2 of a porous metal with a width W and height H of 10mm, a length L of 30mm and a wall thickness of 1.5mm, wherein the diesel particulate filter of Example 14 is characterized by an average pore diameter of 47$\mu$m, a porosity of 70%, a filtration area of 8.4cm$^2$ and a wall gas permeability (permeability) of $1.5 \times 10^{-11} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 5.0\%$.

In Example 15, there is formed a diesel particulate filter of type 2 of ceramic fiber with a width W and height H of 10mm, a length L of 30mm and a wall thickness of 1.5mm, wherein the diesel particulate filter of Example 15 is characterized by an average pore diameter of $50\mu m$, a porosity of 75%, a filtration area of $8.4 cm^2$ and a wall gas permeability (permeability) of $1.0 \times 10^{-11} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 5.0\%$.

In Example 16, there is formed a diesel particulate filter of type 2 of cordierite with a width W and height H of 2mm, a length L of 50mm and a wall thickness of 0.4mm, wherein the diesel particulate filter of Example 16 is characterized by an average pore diameter of $20\mu m$, a porosity of 60%, a filtration area of $2.4 cm^2$ and a wall gas permeability (permeability) of $1.5 \times 10^{-12} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 5.0\%$.

In Example 17, there is formed a diesel particulate filter of type 2 of Si-SiC with a width W and height H of 2mm, a length L of 50mm and a wall thickness of 0.4mm, wherein the diesel particulate filter of Example 17 is characterized by an average pore diameter of $20\mu m$, a porosity of 60%, a filtration area of $2.4 cm^2$ and a wall gas permeability (permeability) of $2.5 \times 10^{-12} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 5.0\%$.

In Comparative Example 1, there is formed a diesel particulate filter of type 1 of SiC with a diameter D of 2.5mm and a height of 0.4mm, wherein the diesel particulate filter of Comparative Example 1 is characterized by an average pore diameter of $9\mu m$, a porosity of 42%, a filtration area of $0.05 cm^2$ and a wall gas permeability (permeability) of $5.0 \times 10^{-13} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 15.0\%$.

In Comparative Example 2, there is formed a diesel particulate filter of type 3 of SiC with a diameter D of 60 and a height H of 50mm. With the diesel particulate filter of Comparative Example 2, cells are formed with a density of 300 cells per square inch (300cpsi) with a wall thickness of 0.25mm, wherein the diesel particulate filter of Comparative Example 2 is characterized by an average pore diameter of $11\mu m$, a porosity of 42%, a filtration area of $1596.0 cm^2$ and a wall gas permeability (permeability) of $9.0 \times 10^{-13} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 17.5\%$.

Further, with a Reference Example 1, there is formed a diesel particulate filter of type 2 of ceramic fiber with a width W and height H of 10mm, a length L of 30mm and a wall thickness of 1.5mm, wherein the diesel particulate filter of Reference Example 1 is characterized by an average pore diameter of $70\mu m$, a porosity of 70%, a filtration area of $8.4 cm^2$ and a wall gas permeability (permeability) of $2.0 \times 10^{-11} m^2$. In the case this diesel particulate filter is used for the secondary diesel particulate filter 22A in the exhaust gas purifying apparatus of Figure 6, it was observed that the error between the actual deposition amount of the particulate matter in the primary diesel particulate filter (DPF) 22 and the evaluation value thereof evaluated from the differential pressure across the secondary diesel particulate filter 22A was $\pm 8.8\%$.

From Figure 10, it is concluded that it is preferable that the diesel particulate filter used for the secondary diesel particulate filter 22A has the filtration area in the range of 0.1 - 1000cm$^2$, more preferably 1 - 10cm$^2$ and the wall gas permeability (permeability) in the range of $1.0 \times 10^{-15}$ - $1.0 \times 10^{-11} m^2$, more preferably $1.0 \times 10^{-13}$ - $1.0 \times 10^{-12} m^2$.

It should be noted that the foregoing experiment has been made by providing the exhaust gas purifying apparatus of Figure 6 to the exhaust line of a 2-litre diesel engine and running the engine for 5 hours at the condition of 3000rpm/50N. Thereby, the actual deposition amount of the particulate matter in the primary diesel particulate filter (DPF) 22 was obtained by way of weight measurement, and the value thus obtained is compared with the evaluated value obtained from the differential pressure across the secondary diesel particulate filter 22A.

In the experiment, a filter having a diameter of 143.8mm and a height of 150mm was used for the primary diesel particulate filter (DPF) 22.

More specifically, the primary diesel particulate filter (DPF) 22 was formed by: forming a unit in the width and height of 34.4mm and the length of 150mm by using the cells of the average pore diameter of 11μm and the porosity of 42%, wall thickness of 0.25mm and the cell density of 300cpsi; binding 16 (=4x4) units with each other, and machining the side surfaces. Further, in the foregoing experiment, a diameter of 150mm was used for the exhaust line 21 and the diameter of the secondary exhaust line 21A was set to 10mm. Thereby, regeneration of the secondary diesel particulate filter 22A was conducted each time the particulate matter is deposited in the secondary diesel particulate filter 22A with the amount of 0.5g/l.

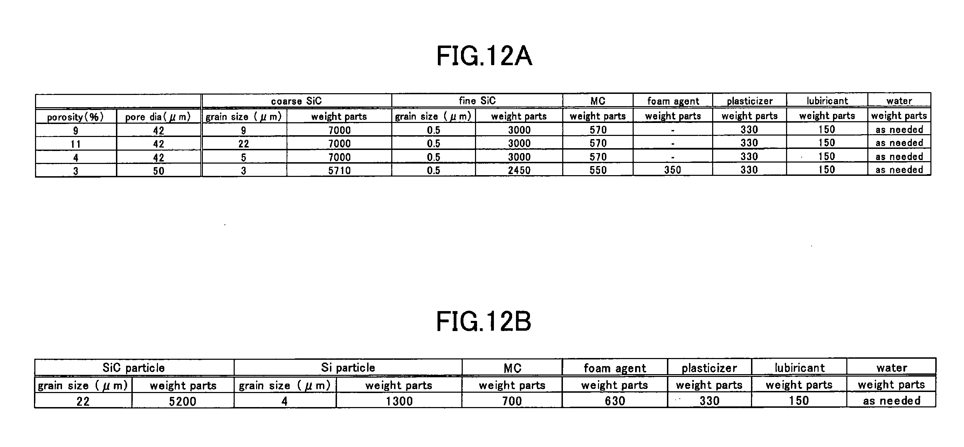

Figure 12A shows the mixing of source materials when forming the diesel particulate filter of SiC with the average pore diameters and porosities of: 9μm and 42%; 11μm and 42%; 4μm and 42%; and 3μm and 50% used in the foregoing Experiments 1 - 13 and Comparative Experiments 2 and 3.

Referring to Figure 12A, it can be seen that the SiC diesel particulate filter having the average pore diameter of 9μm and porosity of 42% can be formed by kneading SiC coarse particles having the grain diameter of 9μm and SiC fine particles having the grain diameter of 0.5μm respectively with 7000 weight parts and 3000 weight parts together with an organic binder (MC) of 570 weight parts, a plasticizer of 330 weight parts, a lubricant of 150 weight parts and water of appropriate amount, wherein the source mixture thus obtained is shaped to a predetermined shape such as honeycomb shape by an extruding process. After the extruding process, the green body thus obtained is subjected to a degreasing process conducted for 3 hours at 300°C, followed by a firing process conducted at 2200°C for 3 hours.

Referring to Figure 12A, it can be seen that the SiC diesel particulate filter having the average pore diameter of 11μm and porosity of 42% can be formed by kneading SiC coarse particles having the grain diameter of 22μm and SiC fine particles having the grain diameter of 0.5μm respectively with 7000 weight parts and 3000 weight parts together with an organic binder (MC) of 570 weight parts, a plasticizer of 330 weight parts, a lubricant of 150 weight parts and water of appropriate amount, wherein the source mixture thus obtained is shaped to a predetermined shape such as honeycomb shape by an extruding process. After the extruding process, the green body thus obtained is subjected to a degreasing process conducted for 3 hours at 300°C, followed by a firing process conducted at 2200°C for 3 hours.

Further, referring to Figure 12A, it can be seen that the SiC diesel particulate filter having the average pore diameter of 4μm and porosity of 42% can be formed by kneading SiC coarse particles having the grain diameter of 5μm and SiC fine particles having the grain diameter of 0.5μm respectively with 7000 weight parts and 3000 weight parts together with an organic binder (MC) of 570 weight parts, a plasticizer of 330 weight parts, a lubricant of 150 weight parts and water of appropriate amount, wherein the source mixture thus obtained is shaped to a predetermined shape such as honeycomb shape by an extruding process. After the extruding process, the green body thus obtained is subjected to a degreasing process conducted for 3 hours at 300°C, followed by a firing process conducted at 2200°C for 3 hours.

Further, referring to Figure 12A, it can be seen that the SiC diesel particulate filter having the average pore diameter of 3μm and porosity of 50% can be formed by kneading SiC coarse particles having the grain diameter of 3μm and SiC fine particles having the grain diameter of 0.5μm respectively with 5710 weight parts and 2450 weight parts together with an organic binder (MC) of 550 weight parts, a plasticizer of 350 weight parts, a lubricant of 350 weight parts and water of appropriate amount, wherein the source mixture thus obtained is shaped to a predetermined shape such as honeycomb shape by an extruding process. After the extruding process, the green body thus obtained is subjected to a degreasing process conducted for 3 hours at 300°C, followed by a firing process conducted at 2200°C for 3 hours.

Figure 12B shows the mixing of source materials when forming the diesel particulate filter of Si-SiC used in Example 17 and having the average pore diameter of 20μm and porosity of 60%.

Referring to Figure 12B, it can be seen that the Si-SiC diesel particulate filter having the average pore diameter of 20μm and porosity of 60% can be formed by kneading SiC coarse particles having the grain diameter of 22μm and SiC fine particles having the grain diameter of 4μm respectively with 5210 weight parts and 1300 weight parts together with an organic binder (MC) of 700 weight parts, a plasticizer of 330 weight parts, a lubricant of 150 weight parts and water of appropriate amount, wherein the source mixture thus obtained is shaped to a predetermined shape by an extruding process. After the extruding process, the green body thus obtained is subjected to a degreasing process conducted for 3 hours at 300°C, followed by a firing process conducted at 1650°C for 3 hours.

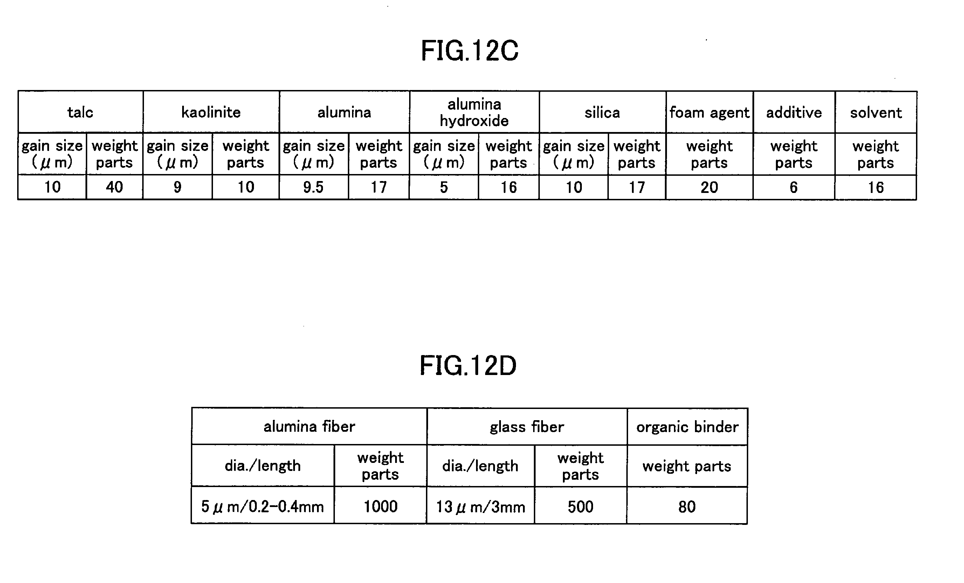

Figure 12C shows the mixing of source materials of cordierite ceramic used in Example 16 and having the average pore diameter of 20μm and porosity of 60%.

Referring to Figure 12C, it can be seen that the cordierite diesel particulate filter having the average pore diameter of 20μm and porosity of 60% can be formed by kneading talc particles having the grain diameter of 10μm, kaolin particles having the grain diameter of 9μm, alumina particles having the grain diameter of 9.5μm, aluminum hydroxide particles having the grain diameter of 5μm, and silica particles having the grain diameter of 10μm with respective weight parts of 40, 10, 17, 16 and 18, together with a foaming agent of 20 weight parts, a plasticizer of 6 weight parts, a solvent of 16 weight parts, wherein the source mixture thus obtained is shaped to a predetermined shape by an extruding process. After the extruding process, the green body thus obtained is subjected to a degreasing process conducted for 3 hours at 300°C, followed by a firing process conducted at 1400°C for 3 hours.

Figure 12D shows the outline of manufacturing the diesel particulate filter of ceramic fiber used with Example 15 and Reference Example 1.

Referring to Figure 12D, alumina fibers having an average diameter of 5μm and a length of 0.2 - 0.4mm and glass fibers having an average diameter of 13μm and a length of 3mm are dispersed in water respectively with 1000 weight parts and 500 weight parts together with an organic binder of 80 weight parts, and sheet is formed therefrom by a papeheating process. Further, the sheet thus obtained is heated at the temperature of 950°C for 5 hours. Further, after treatment in acid, heating is conducted again at the temperature of 1050°C for 5 hours. Thereby, the diesel particulate filter is obtained by shaping the sheet thus obtained according to a predetermined shape.

In Example 14 of Figure 11, it is possible to use a three-dimensional mesh structure of a Ni-C-W alloy (trade name MA23) marketed by Mitsubishi Material for the diesel particulate filter after a compression processing such that the predetermined average pore diameter and porosity are attained.


[SECOND EMBODIMENT]


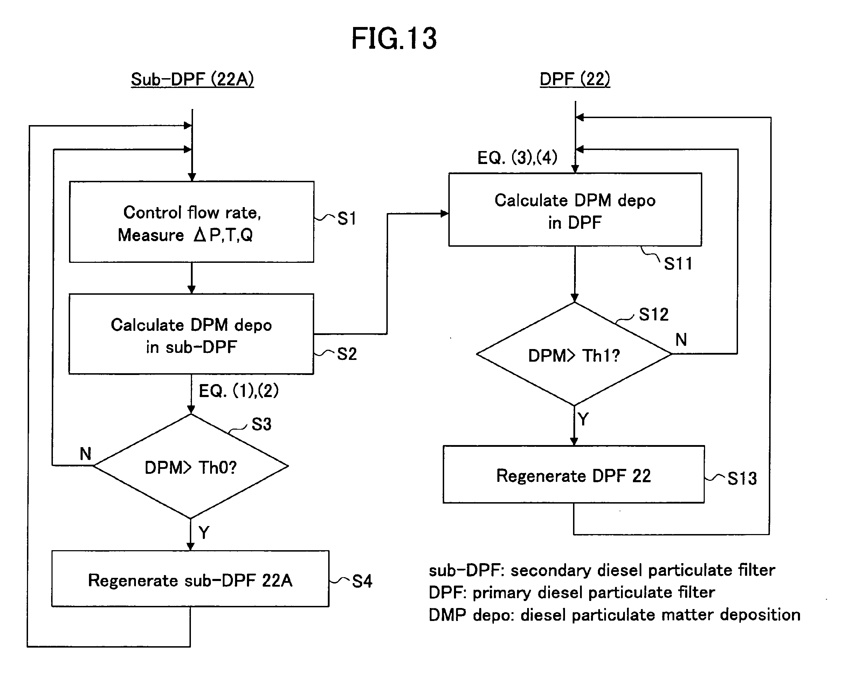

Figure 13 is a flowchart showing the exhaust gas purifying method according to a second embodiment of the present invention that uses the exhaust gas purifying apparatus of Figure 4.

Referring to Figure 13, the exhaust gas flow rate Q is detected by the flow meter 24 in the step 1 and the differential pressure ΔP across the secondary diesel particulate filter 22A is detected by the differential pressure gauge 22B. Further, the temperature of the exhaust gas is detected by using the temperature of the temperature measuring part T1.

Next, in the step 2, the layer thickness W of the particulate matter collected by the secondary diesel particulate filter 22A is obtained from the differential pressure ΔP detected in the step 1 according to Equation (1). Here, it should be noted that the temperature T of the exhaust gas may be obtained by using the temperature measuring part T2 of the primary diesel particulate filter (DPF) 22 in place of using the temperature measuring part T1 of the secondary diesel particulate filter 22A as in the present case. Further, the temperature T may be calculated from the temperatures of the temperature measuring parts T1 and T2 (in the form of average value, maximum value, minimum value, for example). From the viewpoint of calculating the amount of the particulate matter more precisely, it is preferable to use the temperature of the temperature measuring part T1 of the secondary diesel particulate filter 22A. For the thermometer, a thermocouple may be used, while it is also possible to use anything as long as it can measure the temperature. While it is preferable to measure the temperature of the exhaust gas inside the exhaust pipe, it is also possible to measure the temperature of the filter or the cell.

Further, in the step 2, the mass $m_{soot}$ of the particulate matter collected by the cell 21b is obtained from the layer thickness W detected in the step 1 by using Equation (2) mentioned previously.

Further, in the step 3, it is judged whether or not the mass $m_{soot}$ of the layered particulate matter deposited in the cell 22b of the secondary diesel particulate filter 22A has exceeded a predetermined threshold Th0, and if the result is NO, the process returns to the step 1.

When the mass $m_{soot}$ of the layered particulate matter deposited in the cell 22b of the secondary diesel particulate filter 22A has exceeded the predetermined threshold Th0 in the step 3, the heater 22h is activated in the step 4 and the particulate matter 22c is removed by burning.

Meanwhile, in the process of Figure 8, the concentration PM of the particulate matter in the exhaust gas is obtained in the step 11 from Equation (3) while using the mass $m_{soot}$ of the collected particulate matter in the cell 22b obtained in the step 2, and the deposited amount $PM_{enter\ full\ filter}$ of the particulate deposited in the principal diesel particulate filter 22 is obtained from Equation (4) and from the collection efficiency of the primary diesel particulate filter (DPF) 22.

Thus, in the step 12, it is judged whether or not the deposited amount $PM_{enter}$ full filter of the particulate matter in the primary diesel particulate filter (DPF) 22 exceeds a predetermined threshold value Th1, and if the result of judgment is NO, the operation returns to the step S11.

In the event it is judged in the step 12 that the deposited amount $PM_{enter}$ full filter of the particulate matter in the primary diesel particulate filter (DPF) 22 exceeds the predetermined threshold value Th1, post injection is executed in the step 13 by controlling an engine control unit (ECU), and the deposited particulate matter in the primary diesel particulate filter (DPF) 22 is removed by burning. Thereby, regeneration of filter is achieved.

With the process of Figure 13, it is possible to carry out the regeneration of the secondary diesel particulate filter 22A and the primary diesel particulate filter (DPF) 22 independently, and thus, it is possible to always maintain the deposited amount of the particulate matter 22c, or the amount of the soot layer, in the cell 22b, which constitutes the secondary diesel particulate filter 22A, to be a small value of 0.5g/l or less. With such a construction, it becomes possible to improve the sensitivity of the particulate matter sensor that uses the secondary diesel particulate filter 22A.

With the construction of Figure 6, in which the valve 23 is inserted into the secondary exhaust line 21A, there is caused no such a situation that the exhaust gas flows predominantly through the secondary diesel particulate filter where regeneration has been made even when the regeneration of the secondary diesel particulate filter 22A is conducted independently to the primary diesel particulate filter (DPF) 22, and there is caused no error in the evaluation of the deposited amount of the particulate matter in the primary diesel particulate filter (DPF) 22.

Thereby, it should be noted that there is no need for the valve 23 to maintain the exhaust gas flow rate in the secondary exhaust line 21A exactly at a constant level but it is just sufficient to avoid extreme deviation of the exhaust gas flow to the secondary exhaust line 21A.

Thus, in the second embodiment noted above, the differential pressure $\Delta P$, the exhaust gas temperature T and the exhaust gas flow rate Q are measured (step 1), the mass of the particulate matter collected by the secondary diesel particulate filter is obtained by using Equations (1) and (2) from the foregoing result of measurement (step 2), and the amount of the particulate matter collected by the primary diesel particulate filter is obtained from the amount of the particulate matter collected in the secondary diesel particulate filter by using Equations (3) and (4) and further using the collection efficiency of the primary diesel particulate filter (step 11).

In Figure 8, and also in Figure 9 to be explained below, the primary diesel particulate filter (DPF) 22 is designated as DPF while the secondary diesel particulate filter 22A is designated as sub-DPF. Further, the deposition of diesel particulate matter is designated as DPM depo.

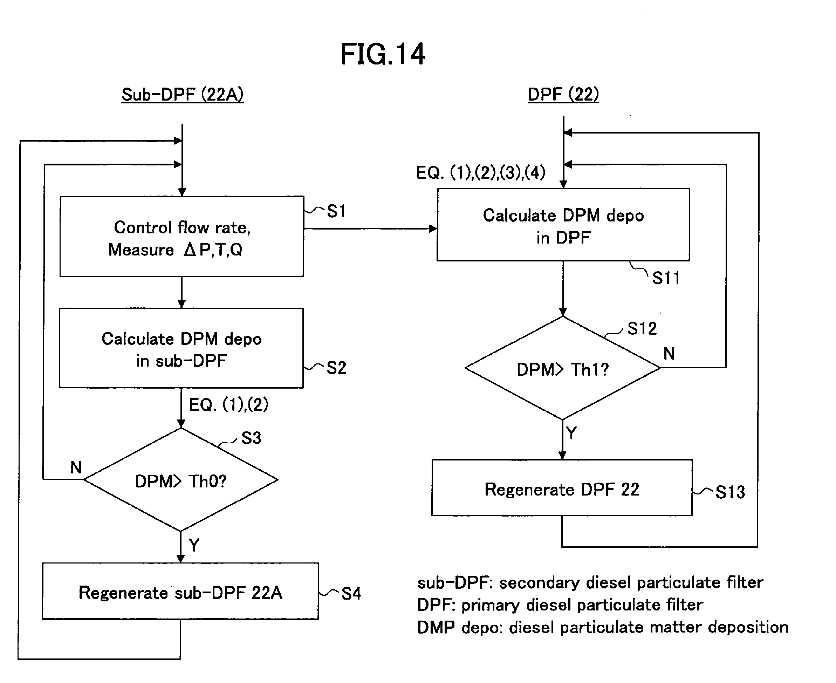

On the other hand, the process of obtaining the amount of the particulate matter collected in the primary diesel particulate filter may be modified as shown in Figure 14.

Thus, in Figure 14, the process for obtaining the amount of the particulate matter collected by the primary diesel particulate filter (step 11) is carried out in parallel with the process of obtaining the amount of the particulate matter collected by the secondary diesel particulate filter (step 2), while using the result of measurement obtained in the step 1.

[THIRD EMBODIMENT]

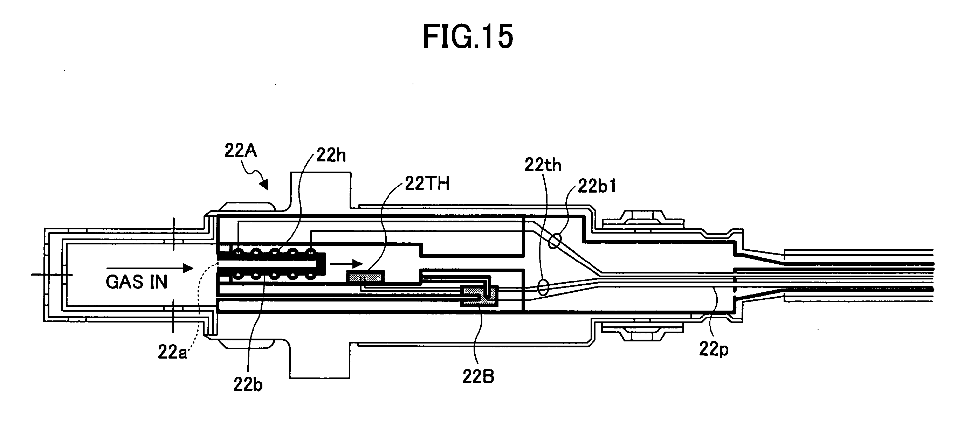

Figure 15 shows the construction of a particulate matter sensor according to a third embodiment of the present invention, wherein those parts corresponding to the parts described previously are designated by the same reference numerals and the description thereof will be omitted.

With the embodiment of Figure 15, there is further provided a thermistor 22Th outside the housing of the particulate matter detection sensor as a temperature measuring part, wherein a resistance value of the thermistor 22Th is read by a control circuit via a signal line 22th.

With the embodiment of Figure 15, the thermistor 22Th is integrated into the housing of the particulate sensor, and as a result, it becomes possible to construct the particulate matter sensor in a compact size, suitable for providing at any desired location of the diesel engine.

[FOURTH EMBODIMENT]

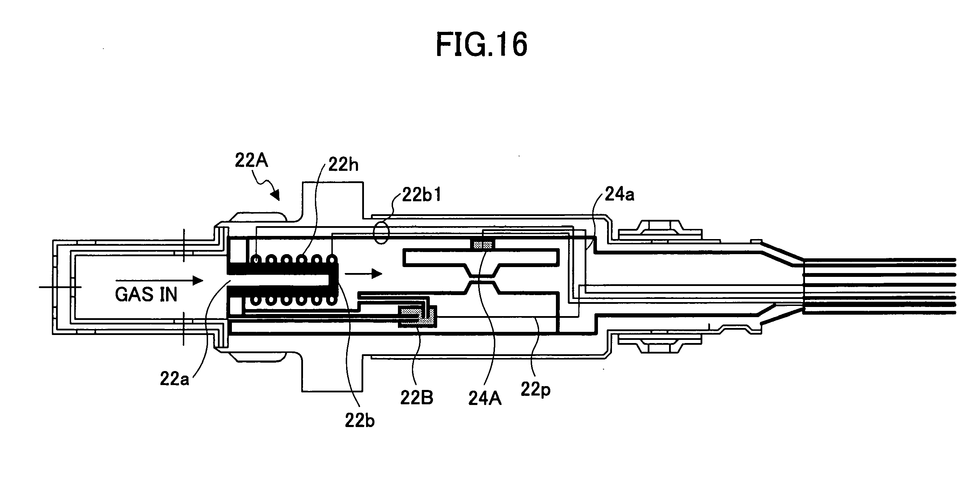

Figure 16 shows the construction of a particulate matter sensor according to a fourth embodiment of the present invention, wherein those parts corresponding to the parts described previously are designated by the same reference numerals and the description thereof will be omitted.

With the embodiment of Figure 16, there is provided a flow meter 24A of a differential-pressure venturi tube inside the housing of the particulate matter sensor as the flow meter 24, wherein the output of the flow meter 24A is forwarded to the control circuit via a signal line 24a.

Thus, with the embodiment of Figure 16, it becomes possible to read the flow rate of the exhaust gas flowing through the cell 22b by the flow meter 24A of the differential-pressure venturi tube. Because the flow meter 24A is integrated into the housing of the particulate matter sensor, the particulate matter sensor is constructed to have a compact size, and it becomes possible to provide the particulate matter sensor at any desired location of the diesel engine.

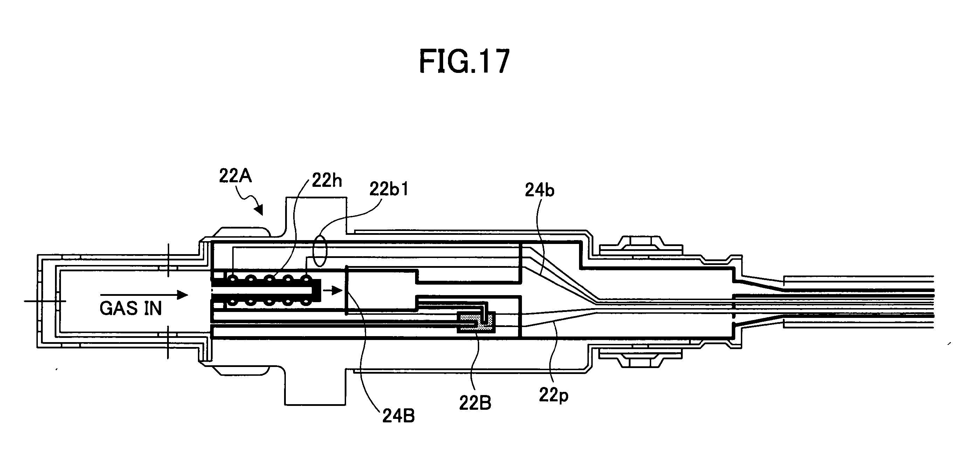

Figure 17 shows a modification of the particulate sensor of Figure 16.

Referring to Figure 17, there is provided a simple hot-wire flow meter 24B with the present embodiment in place of the flow meter 24A of differential-pressure venturi tube of Figure 13, and the flow rate of the exhaust gas flowing through the cell 22b is read by the control circuit via a signal line 24b.

Further, while the explanation heretofore has been made for the case of using a honeycomb component of SiC for the primary diesel particulate filter (DPF) 22 and the secondary diesel particulate filter 22A, the present invention is by no means limited to such particular filter components, and it is also possible to use a composite material containing silicon carbide by 60% or more, such as a composite of silicon carbide and metal such as silicon (the present invention includes such a composite also in silicon carbide), a nitride such as aluminum nitride, silicon nitride, boron nitride, tungsten nitride, or the like, a carbide such as Zirconium carbide, titanium carbide, tantalum carbide, tungsten carbide, or the like, an oxide such as alumina, zirconium oxide, cordierite, mullite, silica, aluminum titanate, or a porous body of metal such as stainless steel. Further, it is possible to use a structural body such as corrugate or element plate in addition to the honeycomb structure.

The exhaust gas purifying apparatus by using the particulate matter sensor of the present invention has a compact size and is applicable not only to large vehicles such as trucks or industrial machines but also to passenger cars.

## Claims

1. A particulate matter detection sensor, comprising:

   a particulate matter detection filter; and
   a differential pressure measuring part measuring a differential pressure between an inlet and an outlet of said particulate matter detection filter,
   wherein said particulate matter detection filter has a filtration area in the range of 0.1 - 1000cm$^2$.

2. The particulate matter detection sensor as claimed in claim 1, wherein said filtration area is in the range of 1 - 10cm$^2$.

3. The particulate matter detection sensor as claimed in claim 1 or 2, wherein said particulate matter detection filter has a wall gas permeability in the range of $1.0 \times 10^{-15}$ - $1.0 \times 10^{-11}$m$^2$.

4. The particulate matter detection sensor as claimed in claim 3, wherein said wall gas permeability is in the range of $1.0 \times 10^{-13}$ - $1.0 \times 10^{-12}$m$^2$.

5. The particulate matter detection sensor as claimed in any of claims 1 - 4, further comprising a temperature measuring part measuring a temperature.

6. The particulate matter detection sensor as claimed in any of claims 1 - 5, further comprising a flow meter or equivalent meter that measures a flow rate of an exhaust gas flowing through said particulate detection filter.

7. The particulate matter detection sensor as claimed in any of claims 1 - 6, further comprising a vessel, at least one of said particulate detection filter, said differential pressure measuring part, said temperature measuring part and said flow meter is accommodated in said vessel.

8. The particulate matter detection sensor as claimed in any of claims 1 - 7, wherein said particulate detection filter comprises any of SiC, aluminum nitride, silicon carbide, boron nitride, tungsten nitride, zirconium carbide, titanium carbide, tantalum carbide, tungsten carbide, alumina, zirconium oxide, cordierite, mullite, silica, and aluminum titanate.

## Amended claims in accordance with Rule 137(2) EPC.

1. A particulate matter detection sensory comprising:

   a particulate matter detection filter (22A); and
   a differential pressure measuring part (22B) measuring a differential pressure between an inlet and an outlet of said particulate matter detection filter,

   wherein said particulate matter detection filter has a filtration area in the range of 0.1 - 1000cm$^2$.

2. The particulate matter detection sensor as claimed in claim 1, wherein said filtration area is in the range of 1 - 10cm$^2$.

3. The particulate matter detection sensor as claimed in claim 1 or 2, wherein said particulate matter detection filter has a wall gas permeability in the range of $1.0 \times 10^{-15}$ - $1.0 \times 10^{-11}$m$^2$.

4. The particulate matter detection sensor as claimed in claim 3, wherein said wall gas permeability is in the range of $1.0 \times 10^{-13}$ - $1.0 \times 10^{-12}$m$^2$ .

5. The particulate matter detection sensor as claimed in any of claims 1 - 4, further comprising a temperature measuring part (T1) measuring a temperature.

**6.** The particulate matter detection sensor as claimed in any of claims 1 - 5, further comprising a flow meter (24) or equivalent meter that measures a flow rate of an exhaust gas flowing through said particulate detection filter.

**7.** The particulate matter detection sensor as claimed in any of claims 1 - 6, further comprising a vessel (22e), at least one of said particulate detection filter, said differential pressure measuring part, said temperature measuring part and said flow meter is accommodated in said vessel.

**8.** The particulate matter detection sensor as claimed in any of claims 1 - 7, wherein said particulate detection filter comprises any of SiC, aluminum nitride, silicon carbide, boron nitride, tungsten nitride, zirconium carbide, titanium carbide, tantalum carbide, tungsten carbide, alumina, zirconium oxide, cordierite, mullite, silica, and aluminum titanate.

# FIG.1

# FIG.2A

12A

12b

12a

EXHAUST GAS

# FIG.2B

12B

12a   12a

12b

# FIG.2C

<u>12B</u>

12a   12c   12b

EXHAUST GAS

# FIG.2D

FIG.3

FIG.4

# FIG.5

SOOT THICKNESS
@8g/L

| 109 [$\mu$m] | 175 [$\mu$m] | 255 [$\mu$m] |

UNIT PRESSURE LOSS
@8g/L 680°C
3m/s

| 15.3 [KPa] | 11.8 [KPa] | 8.8 [KPa] |

EP 1 914 536 A1

# FIG.6

FROM ENGINE

EXHAUST

21

21A

T2

22

DPF

Q₁

ΔP

T1

22A

22B

23

24

FLOW METER

Q₂

PM SENSOR

EP 1 914 536 A1

# FIG.7A

METAL HOUSING

22B

22i

22b

22A

GAS OUT 22d

GAS IN

22e

22h

# FIG.7B

<u>22A</u>

22b

T

22a

22c

$\Delta P$

Q

GAS OUT

FIG.8

GAS IN

22A

22h

22e

22bl

22bl

22p

22B

22b

22a

FIG.9

## FIG.10

| | material | filter type | size | filter area (cm²) | permeability (m²) | pore dia. (um) /porisity (%) | error ±% |
|---|---|---|---|---|---|---|---|
| Example 1 | SiC | 1 | φ 3.6mm × 0.4mm | 0.1 | 5.0 × 10^-13 | 9/42 | 8.8 |
| Example 2 | SiC | 2 | 1.5mm × 1.5mm × 25mm(thickness 0.25mm) | 1.0 | 9.0 × 10^-13 | 11/42 | 5 |
| Example 3 | SiC | 2 | 1.5mm × 1.5mm × 50mm(thickness 0.25mm) | 2.0 | 9.0 × 10^-13 | 11/42 | 2.5 |
| Example 4 | SiC | 2 | 2mm × 2mm × 50mm(thickness 0.4mm) | 2.4 | 5.0 × 10^-13 | 9/42 | 2.5 |
| Example 5 | SiC | 2 | 1.5mm × 1.5mm × 100mm(thickness 0.25mm) | 4.0 | 9.0 × 10^-13 | 11/42 | 3.8 |
| Example 6 | SiC | 2 | 2mm × 2mm × 100mm(thickness 0.4mm) | 4.8 | 5.0 × 10^-13 | 9/42 | 3.8 |
| Example 7 | SiC | 2 | 3mm × 3mm × 100mm(thickness 0.25mm) | 10.0 | 9.0 × 10^-13 | 11/42 | 5 |
| Example 8 | SiC | 3 | 4.7mm × 4.7mm × 50mm(thickness 0.25mm/300cpsi 3 × 3cells 4cells sealed at inlet) | 12.2 | 9.0 × 10^-13 | 11/42 | 6.3 |
| Example 9 | SiC | 3 | φ 15mm × 50mm(thickness 0.25mm/300cpsi) | 100 | 9.0 × 10^-13 | 11/42 | 8.8 |
| Example 10 | SiC | 3 | φ 25mm × 50mm(thickness 0.25mm/300cpsi) | 277 | 9.0 × 10^-13 | 11/42 | 8.8 |
| Example 11 | SiC | 3 | φ 47mm × 50mm(thickness 0.25mm/300cpsi) | 980 | 9.0 × 10^-13 | 11/42 | 8.8 |
| Example 12 | SiC | 2 | 2mm × 2mm × 50mm(thickness 0.4mm) | 2.4 | 1.0 × 10^-13 | 4/42 | 2.5 |
| Example 13 | SiC | 2 | 2mm × 2mm × 50mm(thickness 0.4mm) | 2.4 | 3.0 × 10^-14 | 3/50 | 3.8 |
| Example 14 | porous metal | 2 | 10mm × 10mm × 30mm(thickness 1.5mm) | 8.4 | 1.5 × 10^-11 | 47/70 | 5 |
| Example 15 | ceramic fiber | 2 | 10mm × 10mm × 30mm(thickness 1.5mm) | 8.4 | 1.0 × 10^-11 | 50/75 | 5 |
| Example 16 | cordierite | 2 | 2mm × 2mm × 50mm(thickness 0.4mm) | 2.4 | 1.5 × 10^-12 | 20/60 | 5 |
| Example 17 | Si-SiC | 2 | 2mm × 2mm × 50mm(thickness 0.4mm) | 2.4 | 2.5 × 10^-12 | 20/60 | 5 |
| Comparative Example 1 | SiC | 1 | φ 2.5mm × 0.4mm | 0.05 | 5.0 × 10^-13 | 9/42 | 15 |
| Comparative Example 2 | SiC | 3 | φ 60mm × 50mm(thickness 0.25mm/300cpsi) | 1596 | 9.0 × 10^-13 | 11/42 | 17.5 |
| Reference 1 | ceramic fiber | 2 | 10mm × 10mm × 30mm(thickness 1.5mm) | 8.4 | 2.0 × 10^-11 | 70/70 | 8.8 |

EP 1 914 536 A1

# FIG.11A

Type 1

# FIG.11B

Type 2

# FIG.11C

Type 3

EP 1 914 536 A1

# FIG.12A

| | | coarse SiC | | fine SiC | | MC | foam agent | plasticizer | lubiricant | water |
|---|---|---|---|---|---|---|---|---|---|---|
| porosity(%) | pore dia(μm) | grain size (μm) | weight parts | grain size (μm) | weight parts | weight parts | weight parts | weight parts | weight parts | weight parts |
| 9 | 42 | 9 | 7000 | 0.5 | 3000 | 570 | - | 330 | 150 | as needed |
| 11 | 42 | 22 | 7000 | 0.5 | 3000 | 570 | - | 330 | 150 | as needed |
| 4 | 42 | 5 | 7000 | 0.5 | 3000 | 570 | - | 330 | 150 | as needed |
| 3 | 50 | 3 | 5710 | 0.5 | 2450 | 550 | 350 | 330 | 150 | as needed |

# FIG.12B

| SiC particle | | Si particle | | MC | foam agent | plasticizer | lubiricant | water |
|---|---|---|---|---|---|---|---|---|
| grain size (μm) | weight parts | grain size (μm) | weight parts | weight parts | weight parts | weight parts | weight parts | weight parts |
| 22 | 5200 | 4 | 1300 | 700 | 630 | 330 | 150 | as needed |

EP 1 914 536 A1

## FIG.12C

| talc | | kaolinite | | alumina | | alumina hydroxide | | silica | | foam agent | additive | solvent |
|---|---|---|---|---|---|---|---|---|---|---|---|---|
| gain size ($\mu$m) | weight parts | gain size ($\mu$m) | weight parts | gain size ($\mu$m) | weight parts | gain size ($\mu$m) | weight parts | gain size ($\mu$m) | weight parts | weight parts | weight parts | weight parts |
| 10 | 40 | 9 | 10 | 9.5 | 17 | 5 | 16 | 10 | 17 | 20 | 6 | 16 |

## FIG.12D

| alumina fiber | | glass fiber | | organic binder |
|---|---|---|---|---|
| dia./length | weight parts | dia./length | weight parts | weight parts |
| 5 $\mu$m/0.2-0.4mm | 1000 | 13 $\mu$m/3mm | 500 | 80 |

EP 1 914 536 A1

# FIG.13

Sub-DPF (22A)

DPF (22)

EQ. (3),(4)

**Control flow rate, Measure $\Delta P,T,Q$** — S1

**Calculate DPM depo in DPF** — S11

**Calculate DPM depo in sub-DPF** — S2

EQ. (1),(2)

DPM> Th1? — S12
N

DPM> Th0? — S3
N

Y

**Regenerate DPF 22** — S13

Y

**Regenerate sub-DPF 22A** — S4

sub-DPF: secondary diesel particulate filter
DPF: primary diesel particulate filter
DMP depo: diesel particulate matter deposition

EP 1 914 536 A1

# FIG.14

EP 1 914 536 A1

Sub-DPF (22A)        DPF (22)

EQ. (1),(2),(3),(4)

| Control flow rate, Measure $\Delta P,T,Q$ | S1 |

S1 →

| Calculate DPM depo in DPF | S11 |

| Calculate DPM depo in sub-DPF | S2 |

EQ. (1),(2)

DPM> Th1? — N    S12

DPM> Th0? — N    S3

Y

| Regenerate DPF 22 | S13 |

Y

| Regenerate sub-DPF 22A | S4 |

sub-DPF: secondary diesel particulate filter
DPF: primary diesel particulate filter
DMP depo: diesel particulate matter deposition

EP 1 914 536 A1

# FIG.15

GAS IN

# FIG.16

EP 1 914 536 A1

# FIG.17

EP 1 914 536 A1

GAS IN

## EUROPEAN SEARCH REPORT

**European Patent Office**

Application Number

EP 06 38 6033

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 707 139 A1 (SUMITOMO ELECTRIC INDUSTRIES [JP]; TOYOTA MOTOR CO LTD [JP]) 17 April 1996 (1996-04-17) * page 4, line 52 - page 5, line 3 * * page 6, line 58 - page 10, line 48 * * figures 1-11 * | 1-8 | INV. G01N15/06 B01D46/46 F01N3/032 |
| X | EP 1 508 355 A1 (IBIDEN CO LTD [JP]) 23 February 2005 (2005-02-23) * paragraph [0001] * * paragraph [0028] * * paragraph [0036] * * paragraph [0069] * * paragraph [0102] * * paragraph [0159] - paragraph [0161] * * paragraph [0168] * * paragraph [0176] * * paragraph [0180] * * figures 1-14 * | 1,2,6-8 | |
| A | US 5 458 673 A (KOJIMA AKIKAZU [JP] ET AL) 17 October 1995 (1995-10-17) * column 7, line 39 - column 8, line 51 * * column 9, line 21 - column 9, line 29 * * column 14, line 1 - column 14, line 53 * | 1,5,6 | TECHNICAL FIELDS SEARCHED (IPC) G01N B01D F01N |
| A | US 2004/079137 A1 (RADOLOVICH GIULIANO [US]) 29 April 2004 (2004-04-29) * paragraph [0010] - paragraph [0013] * * claims 30-32 * | 1,2 | |
| A | WO 85/02883 A (FORD WERKE AG [DE]; FORD MOTOR CANADA [CA]; FORD FRANCE [FR]; FORD MOT) 4 July 1985 (1985-07-04) * page 3, line 2 - page 3, line 32 * * page 4, line 1 - page 4, line 21 * * page 6, line 8 - page 7, line 16 * * page 7, line 31 - page 8, line 30 * * figures 1,2 * | 1,8 | |

The present search report has been drawn up for all claims

| Place of search | Date of completion of the search | Examiner |
|---|---|---|
| The Hague | 28 February 2007 | Koch, Anette |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 38 6033

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2007

| Patent document cited in search report | | | Publication date | Patent family member(s) | | Publication date |
|---|---|---|---|---|---|---|
| EP 0707139 | A1 | | 17-04-1996 | DE 69514608 D1 | | 24-02-2000 |
| | | | | DE 69514608 T2 | | 21-09-2000 |
| | | | | US 5961931 A | | 05-10-1999 |
| EP 1508355 | A1 | | 23-02-2005 | EP 1516659 A1 | | 23-03-2005 |
| | | | | EP 1508356 A1 | | 23-02-2005 |
| | | | | EP 1508358 A1 | | 23-02-2005 |
| | | | | EP 1508357 A1 | | 23-02-2005 |
| | | | | EP 1666121 A2 | | 07-06-2006 |
| | | | | EP 1688171 A1 | | 09-08-2006 |
| US 5458673 | A | | 17-10-1995 | NONE | | |
| US 2004079137 | A1 | | 29-04-2004 | US 2005199040 A1 | | 15-09-2005 |
| WO 8502883 | A | | 04-07-1985 | DE 3376490 D1 | | 09-06-1988 |
| | | | | EP 0168388 A1 | | 22-01-1986 |
| | | | | JP 61500864 T | | 01-05-1986 |
| | | | | US 4538411 A | | 03-09-1985 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952920 B

- US 5651248 A